# EUROPÄISCHE PATENTSCHRIFT

(11) **EP 1 367 273 B1**
(45) Veröffentlichungstag und Bekanntmachung des Hinweises auf die Patenterteilung: **09.07.2008**
(21) Anmeldenummer: 03011683.4
(22) Anmeldetag: 23.05.2003
(51) Int. Cl.: F16C 17/10

(54) **Gleitlager zur axialen und radialen Lagerung**
Sliding bearing for radial and axial loads
Palier lisse pour charges radiales et axiales

(30) Priorität: 24.05.2002 DE 20208133 U
(43) Veröffentlichungstag der Anmeldung: 03.12.2003
(73) Patentinhaber: AB SKF, 415 50 Göteborg (SE)
(72) Erfinder: Kottwitz, Bernd, 66346 Püttlingen (DE); Löser, Norbert, 66346 Püttlingen (DE); Liesegang, Hans-Jürgen, 26419 Schortens (DE)
(74) Vertreter: Gosdin, Michael

(56) Entgegenhaltungen:
- DE-A1- 2 311 864
- DE-A1- 10 012 773
- DE-A1- 10 043 936
- DE-C- 850 365
- DE-C1- 10 112 517
- DE-C1- 19 962 978
- US-A- 2 719 761

## Beschreibung

Die Erfindung betrifft ein Gleitlager zur axialen und radialen Lagerung zweier relativ zueinander drehbarer Objekte.

Ein derartiges Gleitlager ist aus der DE 100 12 773 A1 bekannt. Das bekannte Gleitlager weist axial wirkende und radial wirkende Gleitflächen auf, die senkrecht zur Axialrichtung bzw. senkrecht zur Radialrichtung orientiert sind. Die axial wirkenden Gleitflächen können mittels hydraulischer Kolben mehr oder weniger stark gegen ihre Gegenflächen gepresst werden.

Insbesondere bedingt durch die hydraulische Verstellung der Gleitflächen ist die bekannte Lageranordnung relativ aufwändig aufgebaut. Weiterhin ist bei der bekannten Lageranordnung die Justierung sämtlicher Gleitflächen, d. h. einschließlich der radial wirkenden Gleitfläche, relativ schwierig.

Der Erfindung liegt daher die Aufgabe zugrunde, ein radial und axial wirkendes Gleitlager anzugeben, dessen Gleitflächen leicht justierbar sind und das mit möglichst geringem Aufwand realisierbar ist.

Diese Aufgabe wird durch die Merkmalskombination des Anspruchs 1 gelöst.

Das erfindungsgemäße Gleitlager zur axialen und radialen Lagerung zweier relativ zueinander drehbarer Objekte weist einen ersten Lagerring auf, der mit dem ersten Objekt verbunden ist und einen zweiten Lagerring, der mit dem zweiten Objekt verbunden ist. Der erste Lagerring und der zweite Lagerring weisen je eine Axialfläche auf, die direkt oder über einen dazwischen angeordneten Gleitbelag in einem Gleitkontakt zueinander stehen. Weiterhin weisen der erste Lagerring und der zweite Lagerring je eine Kegelstumpffläche auf, die direkt oder über einen dazwischen angeordneten Gleitbelag in einem Gleitkontakt zueinander stehen. Diese Ausbildung der Gleitpaarungen hat den Vorteil, dass die Justierung keinen hohen Aufwand erfordert und dass hohe Axialkräfte sowie bis zu einem begrenzten Maß auch Radialkräfte aufgenommen werden können.

Vorzugsweise ist der erste Lagerring in Axialrichtung aus zwei Ringteilen zusammengesetzt und der zweite Lagerring einstückig ausgebildet. Dadurch wird die Montierbarkeit des Gleitlagers bei gleichzeitig relativ großer Freiheit bei der konstruktiven Umsetzung sichergestellt.

Die beiden Ringteile des ersten Lagerrings können einen Ringraum ausbilden, in den ein umlaufender Radialvorsprung des zweiten Lagerrings hineinragen kann. Dabei können die Axialfläche und die Kegelstumpffläche des zweiten Lagerrings jeweils am Radialvorsprung angeordnet sein. Weiterhin kann die axiale Ausdehnung des Ringraumes einstellbar sein. Dies hat den Vorteil, dass ein Einstellen oder Nachstellen des Spiels des Gleitlagers möglich ist, ohne dass das Gleitlager dazu demontiert werden muss. Dies ist insbesondere bei großen Lagerausführungen äußerst vorteilhaft, da sich damit hohe Demontagekosten einsparen lassen.

Die beiden Ringteile des ersten Lagerrings können durch in Axialrichtung verlaufende Verbindungsschrauben miteinander verbunden sein. Dabei kann eines der beiden Ringteile Buchsen zur Aufnahme der Verbindungsschrauben aufweisen. Die Buchsen können in axialen Durchgangsbohrungen in einem der beiden Ringteile angeordnet sein, wobei die Buchsen länger sind als die Durchgangsbohrungen, so dass die axiale Ausdehnung des Ringraums durch die Länge der Buchsen einstellbar ist. Dies hat den Vorteil, dass sich das Spiel des Gleitlagers sehr einfach einstellen lässt, in dem die Länge der Buchsen jeweils entsprechend angepasst wird. Alternativ dazu können die Buchsen auch jeweils ein Außengewinde aufweisen, das in eine Gewindebohrung in einem der beiden Ringteile des ersten Lagerrings eingreift, so dass die axiale Ausdehnung des Ringraums durch Verdrehen der Buchsen einstellbar ist. Auch diese Variante hat den Vorteil einer sehr einfachen Einstellung des Lagerspiels, wobei in diesem Fall die Buchsen abhängig vom gewünschten Spiel verdreht werden. In einer weiteren Variante können zwischen den beiden Ringteilen des ersten Lagerrings Distanzscheiben angeordnet sein. Diese Variante bietet wiederum den Vorteil einer einfachen Spieleinstellung, indem die Dicke der Distanzscheiben abhängig vom gewünschten Spiel gewählt wird.

Die Gleitbeläge können jeweils mit dem ersten oder zweiten Lagerring verklebt sein. Dies ermöglicht eine sehr einfache und kostengünstige Montage der Gleitbeläge. Im bevorzugten Ausführungsbeispiel sind die Gleitbeläge in Vertiefungen in den beiden Ringteilen des ersten Lagerrings eingesetzt. Dies hat den Vorteil, dass bei der Montage die Positionierung der Gleitbeläge stark vereinfacht wird und gibt den Gleitbelägen des weiteren einen zusätzlichen Halt.

Weiterhin sind die Gleitbeläge im bevorzugten Ausführungsbeispiel jeweils segmentiert ausgeführt. Dies hat den Vorteil, dass die Herstellungskosten für die Gleitbeläge erheblich gesenkt werden können. Ein weiterer Vorteil besteht darin, dass das Handling segmentierter Gleitbeläge wesentlich einfacher ist verglichen mit einstückig ausgebildeten Gleitbelägen. Dadurch wird die Montage der Gleitbeläge vereinfacht. Je nach den speziellen Erfordernissen des Anwendungsfalls können die Gleitbeläge Vertiefungen zur Aufnahme von Schmiermittel aufweisen. Dadurch wird die Verteilung eines gegebenenfalls verwendeten Schmierstoffs und dessen Deponierung im Bereich der Gleitflächen erleichtert.

Das erfindungsgemäße Gleitlager kann insbesondere bei einer Windenergieanlage eingesetzt werden, bei der eine Demontage des Gleitlagers mit sehr hohen Kosten verbunden ist und somit eine Spieleinstellung im montierten Zustand wünschenswert ist. Dabei kann mit dem erfindungsgemäßen Gleitlager beispielsweise das Maschinenhaus der Windenergieanlage drehbar gelagert werden, wobei das Gewicht des Maschinenhauses durch Zusammenwirken der Axialflächen aufgenommen wird und das Maschinenhaus durch Zusammenwirkung der Kegelstumpfflächen gegen Kippen gesichert wird. Desweiteren kann das erfindungsgemäße Gleitlager auch zur schwenkbaren Lagerung jeweils eines Rotorblatts der Windenergieanlage eingesetzt werden.

Die Erfindung wird nachstehend anhand der in der Zeichnung dargestellten Ausführungsbeispiele erläutert.

Es zeigen:
- Figur 1: ein Ausführungsbeispiel des erfindungsgemäßen Gleitlagers, das in einer Windenergieanlage montiert ist, in Schnittdarstellung,
- Figur 2: ein Gleitsegment in Aufsicht,
- Figur 3: eine ausschnittsweise Abbildung eines zweiten Ausführungsbeispiels des erfindungsgemäßen Gleitlagers in Schnittdarstellung und
- Figur 4: eine ausschnittsweise Abbildung eines dritten Ausführungsbeispiels des erfindungsgemäßen Gleitlagers in Schnittdarstellung.

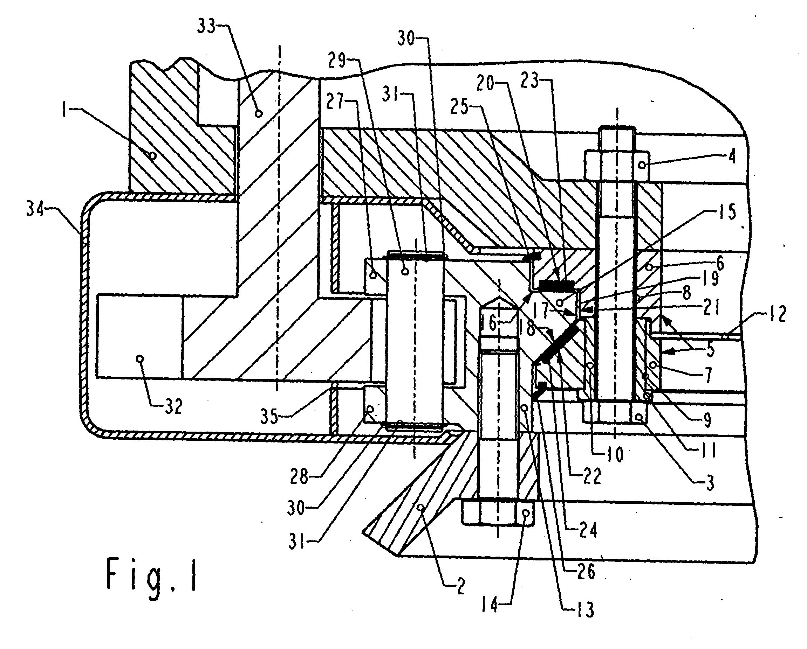

Figur 1 zeigt ein Ausführungsbeispiel des erfindungsgemäßen Gleitlagers eingebaut in eine Windenergieanlage in Schnittdarstellung. Bei dieser Anwendung wird ein Maschinenhaus 1 mit Hilfe des erfindungsgemäßen Gleitlagers auf einem Turm 2 drehbar abgestützt. Das Maschinenhaus 1 ist mittels Verbindungsschrauben 3 und Muttern 4 an einem Innenring 5 angeschraubt. Der Innenring 5 besteht aus einem ersten Ringteil 6 und einem zweiten Ringteil 7, die in Axialrichtung nebeneinander angeordnet sind und ebenfalls durch die Verbindungsschrauben 3 und Muttern 4 zusammengehalten werden. Hierzu sind die Verbindungsschrauben 3 durch entsprechende Durchgangsbohrungen 8 und 9 in den Ringteilen 6 und 7 geführt. Dabei weisen die Durchgangsbohrungen 9 im zweiten Ringteil 7 jeweils einen größeren Durchmesser als die Durchgangsbohrungen 8 im ersten Ringteil 6 aus. In die Durchgangsbohrungen 9 sind jeweils Buchsen 10 eingeführt, die an einem axialen Ende einen umlaufenden Kragen 11 aufweisen, der axial am zweiten Ringteil 7 anliegt. Das andere axiale Ende der Buchse 10 stützt sich jeweils axial am ersten Ringteil 6 ab, so dass abhängig von der Länge der Buchsen 10 ein axialer Spalt 12 zwischen dem ersten Ringteil 6 und dem zweiten Ringteil 7 ausgebildet wird.

Ein Außenring 13 ist über Schrauben 14 am Turm 2 befestigt. Der Außenring 13 weist einen umlaufenden Radialvorsprung 15 auf, der radial nach innen gerichtet ist. Der Radialvorsprung 15 weist eine senkrecht zur Axialrichtung des Gleitlagers orientierte Axialfläche 16, eine senkrecht zur Radialrichtung des Gleitlagers orientierte Radialfläche 17 und eine Kegelstumpffläche 18 auf, deren Mittelachse parallel zur Axialrichtung des Gleitlagers verläuft. Sämtliche Flächen verlaufen rotationssymmetrisch um die Achse des Gleitlagers. Der Radialvorsprung 15 greift in einen zwischen den Ringteilen 6 und 7 ausgebildeten Ringraum 19 ein, der von den Flächen 16, 17 und 18 gegenüberliegenden und komplementär dazu ausgebildeten Flächen 20, 21 und 22 begrenzt wird. Die Flächen 20 und 22 sind jeweils etwas zurückversetzt, so dass Vertiefungen zur Aufnahme von Gleitsegmenten 23 und 24 entstehen. Die Gleitsegmente 23 und 24 können beispielsweise auf die Flächen 20 und 22 aufgeklebt sein und stehen im gleitenden Kontakt zu der Axialfläche 16 und der Kegelstumpffläche 18. Dabei nimmt die Gleitpaarung bestehend aus den Gleitsegmenten 23 und der Axialfläche 16 im wesentlichen das Gewicht des Maschinenhauses 1 auf und die Gleitpaarung bestehend aus den Gleitsegmenten 24 und der Kegelstumpffläche 18 sichert das Maschinenhaus 1 gegen Kippen. Das Spiel in den beiden Gleitpaarungen hängt davon ab, wie stark das erste Ringteil 6 und das zweite Ringteil 7 des Innenrings 5 mit Hilfe der Schrauben 3 einander angenähert sind. Da diese Annäherung durch die Buchsen 10 begrenzt wird, kann das Spiel über die Länge der Buchsen 10 vorgegeben bzw. eingestellt werden.

Um einen Austritt von gegebenenfalls im Bereich der Gleitsegmente 23 und 24 eingebrachten Schmierstoff zu verhindern, ist zwischen dem ersten Ringteil 6 und dem Außenring 13 eine erste Dichtung 25 angeordnet und zwischen dem zweiten Ringteil 7 und dem Außenring 13 eine zweite Dichtung 26.

Damit das Maschinenhaus 1 relativ zum Turm 2 geschwenkt werden kann, ist der Außenring 13 mit einer Triebstockverzahnung versehen. Hierzu weist der Außenring 13 einen U-förmigen Querschnitt auf, wobei das U radial nach außen geöffnet ist. Die beiden Schenkel 27 und 28 sind mit koaxialen Durchgangsbohrungen versehen, in die jeweils ein Triebstockbolzen 29 eingeführt ist. Die Triebstockbolzen 29 sind beidseitig axial durch je einen Seeger-Ring 30 gesichert, der in eine Nut 31 des Triebstockbolzens 29 eingreift. Die unteren Seeger-Ringe 30 können dabei gegebenenfalls auch entfallen, da die Triebstockbolzen 29 bereits durch ihr Gewicht gesichert sind. In die Triebstockbolzen 29 greift ein Ritzel 32 ein, das über eine Welle 33 angetrieben wird. Dabei können auch mehrere Ritzel 32 über den Umfang verteilt angeordnet sein. Der Bereich des Triebstocks und des Ritzels 32 bzw. der Ritzel 32 ist von einer Abdeckung 34 umschlossen, die am Maschinenhaus 1 befestigt ist und jeweils bis auf einen kleinen Spalt an den Außenring 13 heranreicht. Im Bereich des Ritzels 32 bzw. der Ritzel 32 ist in der Abdeckung 34 jeweils eine Öffnung 35 vorgesehen, durch die hindurch das Ritzel 32 jeweils in die Triebstockverzahnung eingreifen kann. Die Abdeckung 34 dient dazu, den im Bereich der Triebstockverzahnung vorgehaltenen Schmierstoff zurückzuhalten und so einem Schmierstoffverlust und einer Verschmutzung der umgebenden Maschinenteile vorzubeugen.

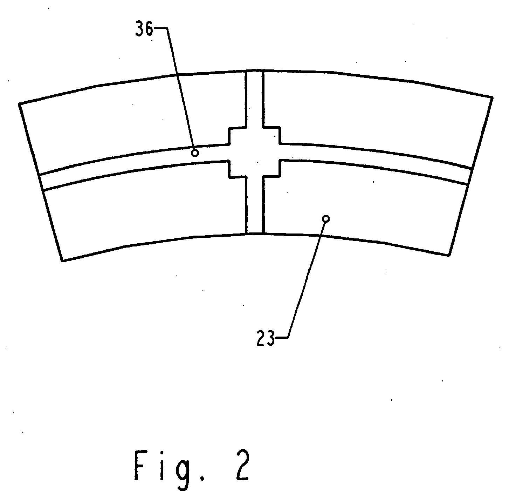

Figur 2 zeigt eine Aufsicht auf ein Gleitsegment 23. Die Gleitsegmente 24 sind entsprechend aufgebaut und besitzen nur eine geringfügig andere Form. Das Gleitsegment 23 kann aus einem Kunststoffmaterial bestehen und mit oder ohne Schmierstoff eingesetzt werden. Um die Verteilung des Schmierstoffs und dessen Deponierung im Bereich der Gleitflächen zu fördern, weist das Gleitsegment 23 Vertiefungen 36 auf. Die Befestigung des Gleitsegments 23 kann durch Kleben und/oder Verschrauben erfolgen. Hierzu ist das Gleitsegment 23 auf seiner Rückseite entsprechend aufgerauht bzw. weist das Gleitsegment 23 entsprechende Bohrungen auf. Statt des abgebildeten Gleitsegments 23 könnte auch prinzipiell ein durchgehender Gleitbelag verwendet werden. In der Regel ist das Handling einzelner Gleitsegmente 23 jedoch einfacher als das eines durchgehenden Gleitbelags. Dies gilt auch im Hinblick auf die Gleitsegmente 24.

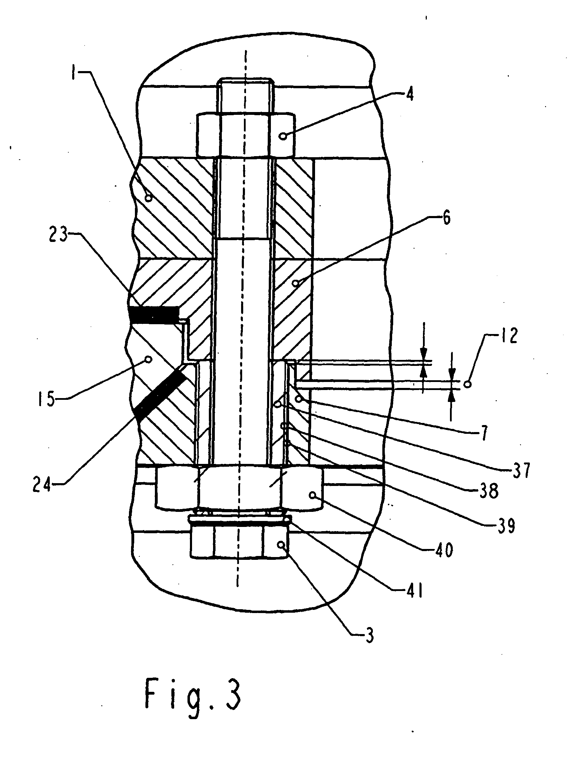

Figur 3 zeigt eine ausschnittsweise Abbildung eines zweiten Ausführungsbeispiels des erfindungsgemäßen Gleitlagers in Schnittdarstellung. Das zweite Ausführungsbeispiel unterscheidet sich von dem in Figur 1 dargestellten hinsichtlich der Komponenten für die Spieleinstellung. Der dargestellte Ausschnitt beschränkt sich daher auf den Bereich, in dem diese Komponente angeordnet sind. Die beiden Ringteile 6 und 7 des Innenrings sind wiederum durch die Verbindungsschrauben 3 und den Muttern 4 miteinander verschraubt. Dabei ist im zweiten Ringteil 7 die Verbindungsschraube 3 durch eine Gewindebuchse 37 geführt, die ein Außengewinde 38 aufweist, und in eine Gewindebohrung 39 im zweiten Ringteil eingeschraubt ist. Die Gewindebuchse 37 ist durch eine Kontermutter 40 gegen Verdrehen gesichert. Auf der Kontermutter 40 ist eine Unterlegscheibe 41 angeordnet, an der die Verbindungsschraube 3 axial anliegt. Beim zweiten Ausführungsbeispiel ist eine Spieleinstellung jeweils durch Lösen der Kontermutter 40 und Verdrehen der Gewindebuchse 37 möglich.

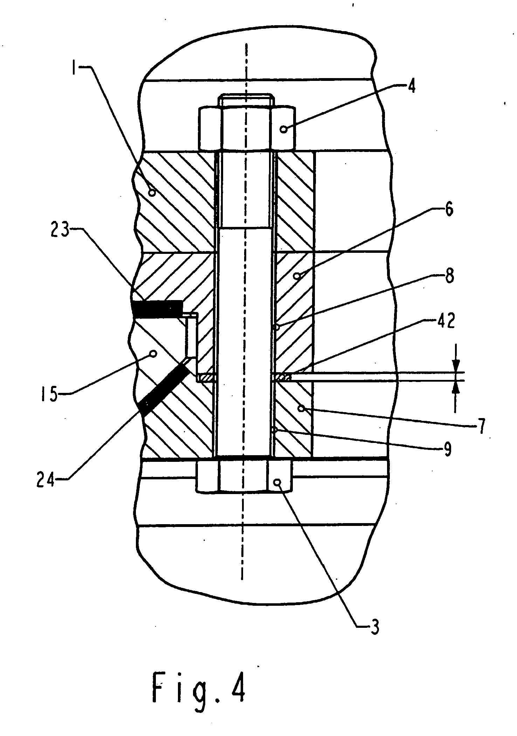

Figur 4 zeigt eine ausschnittsweise Abbildung eines dritten Ausführungsbeispiels des erfindungsgemäßen Gleitlagers in Schnittdarstellung. Es wurde der gleiche Ausschnitt gewählt, wie in Figur 3. Die Besonderheit beim dritten Ausführungsbeispiel besteht darin, dass die Spieleinstellung mit Hilfe von Distanzscheiben 42 erfolgt, mit denen der axiale Abstand zwischen den beiden Ringteilen 6 und 7 des Innenrings 5 eingestellt wird. Die Distanzscheiben 42 sind axial zwischen den beiden Ringteilen 6 und 7 des Innenrings 5 angeordnet und nehmen jeweils eine der Verbindungsschrauben 3 auf, mit deren Hilfe die beiden Ringteile 6 und 7 miteinander verschraubt sind. Da beim dritten Ausführungsbeispiel keine Buchsen 10 bzw. Gewindebuchsen 37 vorgesehen sind, sind die Durchgangsbohrungen 8 im ersten Ringteil 6 und 9 im zweiten Ringteil 7 des Innenrings 5 jeweils glatt und mit gleichem Durchmesser ausgeführt. Um das Spiel des Gleitlagers zu verändern, werden lediglich die Distanzscheiben 42 ausgetauscht, wobei durch das Einsetzen dickerer Distanzscheiben 42 das Spiel vergrößert wird und durch das Einsetzen dünnerer Distanzscheiben 42 das Spiel verkleinert wird.

Alternativ zur dargestellten Lagerung des Maschinenhauses 1 kann das erfindungsgemäße Gleitlager auch zur Lagerung der einzelnen Rotorblätter der Windenergieanlage eingesetzt werden und ein Schwenken der Rotorblätter um deren Längsachse ermöglichen. Diese Schwenkbewegung ist erforderlich, um den Anstellwinkel der einzelnen Rotorblätter an die jeweiligen Windverhältnisse anzupassen.

### Bezugszeichen

- 1: Maschinenhaus
- 2: Turm
- 3: Verbindungsschraube
- 4: Mutter
- 5: Innenring
- 6: erstes Ringteil (Innenring 5)
- 7: zweites Ringteil (Innenring 5)
- 8: Durchgangsbohrung (erstes Ringteil 6)
- 9: Durchgangsbohrung (zweites Ringteil 7)
- 10: Buchse
- 11: Kragen
- 12: Spalt
- 13: Außenring
- 14: Schraube
- 15: Radialvorsprung (Außenring 13)
- 16: Axialfläche (Außenring 13)
- 17: Radialfläche (Außenring 13)
- 18: Kegelstumpffläche (Außenring 13)
- 19: Ringraum
- 20: Axialfläche (erstes Ringteil 6)
- 21: Radialfläche (erstes Ringteil 6)
- 22: Kegelstumpffläche (zweites Ringteil 7)
- 23: Gleitsegment
- 24: Gleitsegment
- 25: Dichtung
- 26: Dichtung
- 27: erster Schenkel (Außenring 13)
- 28: zweiter Schenkel (Außenring 13)
- 29: Triebstockbolzen
- 30: Seeger-Ring
- 31: Nut (Triebstockbolzen 29)
- 32: Ritzel
- 33: Welle
- 34: Abdeckung
- 35: Öffnung
- 36: Vertiefung (Gleitbelag 23)
- 37: Gewindebuchse
- 38: Außengewinde (Gewindebuchse 37)
- 39: Gewindebohrung (zweites Ringteil 7)
- 40: Kontermutter
- 41: Unterlegscheibe
- 42: Distanzscheibe

## Patentansprüche

1. Gleitlager zur axialen und radialen Lagerung zweier relativ zueinander drehbarer Objekte (1, 2) mit einem ersten Lagerring (5), der mit dem ersten Objekt (1) verbunden ist und einem zweiten Lagerring (13), der mit dem zweiten Objekt (2) verbunden ist, wobei der erste Lagerring (5) und der zweite Lagerring (13) je eine Axialfläche (20, 16) aufweisen, die direkt oder über einen dazwischen angeordneten Gleitbelag (23) in einem Gleitkontakt zueinander stehen, **dadurch gekennzeichnet, dass** der erste Lagerring (5) und der zweite Lagerring (13) je eine Kegelstumpffläche (22, 18) aufweisen, die direkt oder über einen dazwischen angeordneten Gleitbelag (24) in einem Gleitkontakt zueinander stehen.

2. Gleitlager nach Anspruch 1, **dadurch gekennzeichnet, dass** der erste Lagerring (5) in Axialrichtung aus zwei Ringteilen (6, 7) zusammengesetzt ist und der zweite Lagerring (13) einteilig ausgebildet ist.

3. Gleitlager nach Anspruch 2, **dadurch gekennzeichnet, dass** die beiden Ringteile (6, 7) des ersten Lagerrings (5) miteinander einen Ringraum (19) ausbilden, in den ein umlaufender Radialvorsprung (15) des zweiten Lagerrings (13) hineinragt.

4. Gleitlager nach Anspruch 3, **dadurch gekennzeichnet, dass** die Axialfläche (16) und die Kegelstumpffläche (18) des zweiten Lagerrings (13) jeweils am Radialvorsprung (15) angeordnet sind.

5. Gleitlager nach einem der Ansprüche 3 oder 4, **dadurch gekennzeichnet, dass** die axiale Ausdehnung des Ringraums (19) einstellbar ist.

6. Gleitlager nach einem der Ansprüche 2 bis 5, **dadurch gekennzeichnet, dass** die beiden Ringteile (6, 7) des ersten Lagerrings (5) durch in Axialrichtung verlaufende Verbindungsschrauben (3) miteinander verbunden sind.

7. Gleitlager nach Anspruch 6, **dadurch gekennzeichnet, dass** eines der beiden Ringteile (6, 7) des ersten Lagerrings (5) Buchsen (10, 37) zur Aufnahme der Verbindungsschrauben (3) aufweist.

8. Gleitlager nach Anspruch 7, **dadurch gekennzeichnet, dass** die Buchsen (10) in axialen Durchgangsbohrungen (9) in einem der beiden Ringteile (6, 7) des ersten Lagerrings (5) angeordnet sind, wobei die Buchsen (10) länger sind als die Durchgangsbohrungen (9), so dass die axiale Ausdehnung des Ringraums (19) durch die Länge der Buchsen (10) einstellbar ist.

9. Gleitlager nach Anspruch 7, **dadurch gekennzeichnet, dass** die Buchsen (37) jeweils ein Außengewinde (38) aufweisen, das in eine Gewindebohrung (39) in einem der beiden Ringteile (6, 7) des ersten Lagerrings (5) eingreift, so dass die axiale Ausdehnung des Ringraums (19) durch Verdrehen der Buchsen (37) einstellbar ist.

10. Gleitlager nach einem der Ansprüche 3 bis 6, **dadurch gekennzeichnet, dass** zwischen den beiden Ringteilen (6, 7) des ersten Lagerrings (5) Distanzscheiben (42) angeordnet sind, so dass die axiale Ausdehnung des Ringraums (19) durch die Dicke der Distanzscheiben (42) einstellbar ist.

11. Gleitlager nach einem der vorhergehenden Ansprüche, **dadurch gekennzeichnet, dass** die Gleitbeläge (23, 24) jeweils mit dem ersten oder zweiten Lagerring (5, 13) verklebt sind.

12. Gleitlager nach einem der vorhergehenden Ansprüche, **dadurch gekennzeichnet, dass** die Gleitbeläge (23, 24) in Vertiefungen in den beiden Ringteilen (6, 7) des ersten Lagerrings (5) eingesetzt sind.

13. Gleitlager nach einem der vorhergehenden Ansprüche, **dadurch gekennzeichnet, dass** die Gleitbeläge (23, 24) jeweils segmentiert ausgeführt sind.

14. Gleitlager nach einem der vorhergehenden Ansprüche, **dadurch gekennzeichnet, dass** die Gleitbeläge (23, 24) Vertiefungen (36) zur Aufnahme von Schmiermittel aufweisen.

15. Gleitlager nach einem der vorhergehenden Ansprüche, **gekennzeichnet durch** seine Anwendung bei einer Windenergieanlage.

16. Gleitlager nach Anspruch 15, **dadurch gekennzeichnet, dass** es ein Maschinenhaus (1) der Windenergieanlage drehbar lagert, wobei das Gewicht des Maschinenhauses (1) durch Zusammenwirken der Axialflächen (16, 20) aufgenommen wird und das Maschinenhaus (1) durch Zusammenwirken der kegelförmig ausgebildeten Flächen (18, 22) gegen Kippen gesichert wird.

17. Gleitlager nach Anspruch 15, **dadurch gekennzeichnet, dass** es jeweils ein Rotorblatt der Windenergieanlage schwenkbar lagert.

## Claims

1. A plain bearing for the axial and radial mounting of two objects (1,2) which can rotate relative to one another, with a first bearing ring (5), which is connected to the first object (1), and with a second bearing ring (13) which is connected to the second object (2), wherein the first bearing ring (5) and the second bearing ring (13) have a respective axial surface (20,16), which surfaces are in sliding contact with one another directly or via a slide lining (23) disposed between them, **characterised in that** the first bearing ring (5) and the second bearing ring (13) have a respective frustoconical surface (22,18), which surfaces are in sliding contact with one another directly or via slide lining (24) disposed between them.

2. A plain bearing according to Claim 1, **characterised in that** the first bearing ring (5) is assembled in an axial direction from two annular parts (6,7) and the second bearing ring (13) is formed in one piece.

3. A plain bearing according to Claim 2, **characterised in that** the two annular parts (6,7) of the first bearing ring (5) form with one another an annular space (19), into which a circumferential radial projection (15) of the second bearing ring (13) projects.

4. A plain bearing according to Claim 3, **characterised in that** the axial surface (16) and the frustoconical surface (18) of the second bearing ring (13) are each arranged on the radial projection (15).

5. A plain bearing according to either Claim 3 or Claim 4, **characterised in that** the axial extension of the annular space (19) is adjustable.

6. A plain bearing according to any one of Claims 2 to 5, **characterised in that** the two annular parts (6,7) of the first bearing ring (5) are connected to one another by axially extending connecting screws (3).

7. A plain bearing according to Claim 6, **characterised in that** one of the two annular parts (6,7) of the first bearing ring (5) has bushes (10,37) for receiving the connecting screws (3).

8. A plain bearing according to Claim 7, **characterised in that** the bushes (10) are arranged in axial through-bores (9) in one of the two annular parts (6,7) of the first bearing ring (5), wherein the bushes (10) are longer than the through-bores (9) so that the axial extension of the annular space (19) can be adjusted by the length of the bushes (10).

9. A plain bearing according to Claim 7, **characterised in that** the bushes (37) each have an external thread (38) which engages in a threaded bore (39) in one of the two annular parts (6,7) of the first bearing ring (5) so that the axial extension of the annular space (19) can be adjusted by rotating the bushes (37).

10. A plain bearing according to any one of Claims 3 to 6, **characterised in that** spacer washers (42) are provided between the two annular parts (6,7) of the first bearing ring_(5) so that the axial extension of the annular space (19) can be adjusted by this thickness of the spacer washers (42).

11. A plain bearing according to any one of the preceding Claims, **characterised in that** the slide linings (23,24) are bonded to the first or second bearing ring (5,13) respectively.

12. A plain bearing according to any one of the preceding Claims, **characterised in that** the slide linings (23,24) are inserted in recesses in the two annular parts (6,7) of the first bearing ring (5).

13. A plain bearing according to any one of the preceding Claims, **characterised in that** the slide linings (23,24) are each of segmented form.

14. A plain bearing according to any one of the preceding Claims, **characterised in that** the slide linings (23,24) have recesses (36) to receive lubricate.

15. A plain bearing according to any one of the preceding Claims, **characterised by** its application in a wind turbine installation.

16. A plain bearing according to Claim 15, **characterised in that** it rotatably supports a machine housing (1) of the wind turbine installation, wherein the weight of the machine housing (1) is accommodated by interaction of the axial surfaces (16,20) and the machine housing (1) is prevented from tilting by interaction of the conical surfaces (18,22).

17. A plain bearing according to Claim 15, **characterised in that** in each case it pivotably supports a rotor blade of a wind turbine installation.

## Revendications

1. Palier lisse pour le montage axial et radial de deux objets tournant l'un par rapport à l'autre (1, 2), comprenant un premier anneau de roulement (5), qui est relié au premier objet (1), et un second anneau de roulement (13), qui est relié au second objet (2), le premier anneau de roulement (5) et le second anneau de roulement (13) comportant chacun une surface axiale (20, 16), lesquelles sont en contact glissant l'une avec l'autre directement ou par l'intermédiaire d'une garniture de glissement (23) disposée entre elles, **caractérisé en ce que** le premier anneau de roulement (5) et le second anneau de roulement (13) comportent chacun une surface tronconique (22, 18), lesquelles sont en contact glissant l'une avec l'autre directement ou par l'intermédiaire d'une garniture de glissement (24) disposée entre elles.

2. Palier lisse selon la revendication 1, **caractérisé en ce que** le premier anneau de roulement (5) se compose, dans la direction axiale, de deux parties d'anneau (6, 7), et le second anneau de roulement (13) est conçu d'un seul tenant.

3. Palier lisse selon la revendication 2, **caractérisé en ce que** les deux parties d'anneau (6, 7) du premier anneau de roulement (5) déterminent l'une avec l'autre un espace annulaire (19) dans lequel pénètre une saillie radiale périphérique (15) du second anneau de roulement (13).

4. Palier lisse selon la revendication 3, **caractérisé en ce que** la surface axiale (16) et la surface tronconique (18) du second anneau de roulement (13) sont disposées chacune sur la saillie radiale (15).

5. Palier lisse selon une des revendications 3 ou 4, **caractérisé en ce que** l'extension axiale de l'espace annulaire (19) est réglable.

6. Palier lisse selon une des revendications 2 à 5, **caractérisé en ce que** les deux parties d'anneau (6, 7) du premier anneau de roulement (5) sont reliées entre elles par des vis de liaison (3) qui s'étendent dans la direction axiale.

7. Palier lisse selon la revendication 6, **caractérisé en ce qu'**une des deux parties d'anneau (6, 7) du premier anneau de roulement (5) comporte des bagues (10, 37) pour recevoir les vis de liaison (3).

8. Palier lisse selon la revendication 7, **caractérisé en ce que** les bagues (10) sont disposées dans des trous de passage axiaux (9) ménagés dans une des deux parties d'anneau (6, 7) du premier anneau de roulement (5), les bagues (10) étant plus longues que les trous de passage (9), de sorte que l'extension axiale de l'espace annulaire (19) est réglable grâce à la longueur des bagues (10).

9. Palier lisse selon la revendication 7, **caractérisé en ce que** les bagues (37) comportent chacune un filetage extérieur (38) qui s'engage dans un taraudage (39) de l'une des deux parties d'anneau (6, 7) du premier anneau de roulement (5), de sorte que l'extension axiale de l'espace annulaire (19) est réglable en tournant les bagues (37).

10. Palier lisse selon une des revendications 3 à 6, **caractérisé en ce qu'**entre les deux parties d'anneau (6, 7) du premier anneau de roulement (5) sont disposées des rondelles d'écartement (42), de sorte que l'extension axiale de l'espace annulaire (19) est réglable grâce à l'épaisseur des rondelles d'écartement (42).

11. Palier lisse selon une des revendications précédentes, **caractérisé en ce que** les garnitures de glissement (23, 24) sont collées au premier, respectivement au second anneau de roulement (5, 13).

12. Palier lisse selon une des revendications précédentes, **caractérisé en ce que** les garnitures de glissement (23, 24) sont logées dans des renfoncements ménagés dans les deux parties d'anneau (6, 7) du premier anneau de roulement (5).

13. Palier lisse selon une des revendications précédentes, **caractérisé en ce que** les garnitures de glissement (23, 24) sont chacune conçues de manière segmentée.

14. Palier lisse selon une des revendications précédentes, **caractérisé en ce que** les garnitures de glissement (23, 24) comportent des renfoncements (36) pour recevoir du lubrifiant.

15. Palier lisse selon une des revendications précédentes, **caractérisé par** son utilisation dans une installation d'énergie éolienne.

16. Palier lisse selon la revendication 15, **caractérisé en ce qu'**il supporte en rotation une nacelle (1) de l'installation d'énergie éolienne, le poids de la nacelle (1) étant supporté par coopération des surfaces axiales (16, 20), et la nacelle (1) étant protégée contre le basculement par coopération des surfaces de conformation conique (18, 22).

17. Palier lisse selon la revendication 15, **caractérisé en ce qu'**il supporte en rotation une pale de rotor de l'installation d'énergie éolienne.
